(19) Europäisches Patentamt
European Patent Office
Office européen des brevets

(11) EP 2 042 318 B1

(12) **EUROPEAN PATENT SPECIFICATION**

(45) Date of publication and mention of the grant of the patent:
**09.02.2011 Bulletin 2011/06**

(51) Int Cl.:
***B41J 2/01*** *(2006.01)* ***B41M 5/025*** *(2006.01)*
***C09D 11/00*** *(2006.01)*

(21) Application number: **08165234.9**

(22) Date of filing: **26.09.2008**

(54) **Inkjet recording method**

Tintenstrahlaufzeichnungsverfahren

Procédé d'impression par jet d'encre

(84) Designated Contracting States:
**DE FR GB**

(30) Priority: **28.09.2007 JP 2007256770**

(43) Date of publication of application:
**01.04.2009 Bulletin 2009/14**

(73) Proprietor: **FUJIFILM Corporation**
**Tokyo 106-8620 (JP)**

(72) Inventor: **Houjou, Hiroaki**
**c/o Fujifilm Corporation**
**Kanagawa-ken (JP)**

(74) Representative: **HOFFMANN EITLE**
**Patent- und Rechtsanwälte**
**Arabellastraße 4**
**81925 München (DE)**

(56) References cited:
**EP-A- 0 606 490** **EP-A- 1 770 131**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

BACKGROUND OF THE INVENTION

Field of the Invention

The present invention relates to an inkjet recording method, and more particularly, to an inkjet image recording method which suppresses the occurrence of image defects.

Description of the Related Art

In water-based inkjet recording method, it is preferable to remove the ink solvent component such as water or high-boiling-point organic solvent after recording in order to ensure durability of the image, such as fixing strength. For this reason, a fixing process has been known which ensures fixing strength by removing the water content by heating the recording medium onto which the image has been recorded, for instance. However, there may be a case where a large amount of water remains inside the structure of the image even after the heating process is carried out. In this case, it is difficult to obtain sufficiently fixing strength since the residual water is not removed completely, even if a fixing process involving heating or the like is carried out.

Japanese Patent Application Publication No. 2005-105161 discloses using pigment particles which are coated with a polymer component having viscosity characteristics which are suited to fixing, and therefore making it possible to achieve high-quality image fixing at high speed and low temperature. However, the pigment particles described in Japanese Patent Application Publication No. 2005-105161 have a large size of 0.5 μm through 4 μm, and the volume of the spaces between particles has tended to be large. For this reason, even if the polymer which is coating the pigment is sufficiently melted (softened), the volume of the gaps cannot be filled in by the flow of polymer and hence the fixing properties are insufficient.

It may be possible to reduce the gaps in the image by making the pigment particles themselves very fine; however, with a pigment which is covered with polymer, there are limits to the degree to which the particle diameter can be reduced. Moreover, by reducing the particles to a very fine size, the interaction between the particles increases and since the surface layer is constituted by a polymer component, then the ink viscosity increases suddenly and the ejection characteristics become problematic.

Furthermore, Japanese Patent Application Publication No. 2004-352768 discloses setting the ratio of the average particle diameter of the pigment to the average particle diameter of the polymer micro-particles having a film forming capability to between 5:6 and 1:6, and thereby making it possible to obtain an image having excellent luster and resistance to wear. However, the polymer micro-particles having a film forming capability typically have a minimum film forming temperature equal to or lower than room temperature, and therefore the formation of a film of the polymer micro-particles progresses in the vicinity of the nozzles during ejection, and hence ejection failures occur frequently in the nozzles and the ejection reliability becomes problematic. Consequently, it is difficult to obtain a beneficial effect in suppressing the ink viscosity by using a mixture of large and small particles.

Moreover, the polymer micro-particles which are liable to form a film give rise to a phenomenon of general or local contraction of the image due to the particles fusing and attracting each other during the heating treatment applied to the image. In particular, if there are gaps in the image film, then this problem is especially marked and becomes increasingly severe the lower the glass transition temperature (Tg) of the polymer micro-particles.

Furthermore, Japanese Patent Application Publication No. 2004-124013 describes obtaining an image having good ink fixing properties, excellent water-proofing and light-proofing characteristics and good luster, by making the average particle diameter of a water-dispersible resin smaller than the particle diameter of a self-dispersible pigment, and making the content ratio of the self-dispersible pigment and the content ratio of the water-dispersible resin in the ink satisfy a prescribed relationship. However, similar problems to those of Japanese Patent Application Publication No. 2004-352768 have occurred even if the method described in Japanese Patent Application Publication No. 2004-124013 is used.

Furthermore, when carrying out fixing at high speed, since the time for heating the recording medium is limited, then residual solvent which has not been completely dried is liable to remain inside the image structure and non-uniformities occurs in the state of drying in the image. In this case, local image defects occur, especially in solid areas of the fixed images, due to the detachment or wearing away of portions which have not dried completely.

EP 0 606 490 A1, which forms the basis for the preamble of claim 1, relates to two intermediate transfer type ink jet recording methods, a recording apparatus suitable for practicing these methods, and an ink composition utilized in the methods and apparatus are disposed. A first recording method consists of the steps of discharging a thermoplastic resin-containing ink composition onto an intermediate drum so as to form an ink image thereon, heating this ink image at a temperature not lower than the softening or melting point of the thermoplastic resin so as to turn the image into a

film, and thereafter transferring the film onto recording paper. A second recording method consists of the steps of discharging a thermoplastic resin-containing ink composition onto an intermediate drum so as to form an ink image thereon, heating the ink image so as to form a condensed ink image, transferring the resultant image onto recording paper, and thereafter heating the image at a temperature not lower than the softening or melting point of the thermoplastic resin.

SUMMARY OF THE INVENTION

The present invention has been contrived in view of these circumstances, an object thereof being to provide an inkjet recording method which suppresses the occurrence of image defects such as decline in the image strength, the occurrence of blank areas in solid image portions, image contraction, and the like, caused by non-uniformities in drying.

In order to attain the aforementioned object, the present invention is directed to an inkjet recording method comprising the steps of: depositing droplets of an ink composition which contains at least water, organic solvent, coloring material particles and polymer micro-particles, one of the coloring material particles and the polymer micro-particles having a volume-average diameter that is 1.3 or more times larger than that of the other of the coloring material particles and the polymer-micro particles, the polymer micro-particles having a softening point (Tc) of 45°C through 120°C and a viscoelastic character that satisfies conditions of:

$$\log G'1 - \log G'2 \geq 2 \ ;$$

and

$$\log G'2 \leq 5$$

where G'1 is a storage elastic modulus of the polymer micro-particles at a temperature of T1 (°C) that is lower than the softening point of the polymer micro-particles by 20°C, and G'2 is a storage elastic modulus of the polymer micro-particles at a temperature of T2 (°C) that is higher than the softening point of the polymer micro-particles by 20°C; removing a solvent component in the deposited droplets of the ink composition so that an ink image derived from the deposited droplets of the ink composition is left; and heating the ink image at a temperature not lower than the softening point (Tc) of the polymer micro-particles.

In this aspect of the present invention, one of the coloring material particles and the polymer micro-particles has a volume-average diameter that is 1.3 or more times larger than that of the other of the coloring material particles and the polymer-micro particles. Hence, since the ink composition contains large particles and small particles, then it is possible to achieve a dense image structure before carrying out the heating and fixing treatment. The organic solvent is distributed uniformly and in a very small amount in the fine gaps between the polymer micro-particles and the coloring material micro-particles. In a state of this kind, when the ink image is heated, evaporation of the residual solvent in the gaps progresses and furthermore, the polymer which has melted (softened) fills in the gaps and therefore sufficient image strength can be obtained. Furthermore, even if a small amount of residual solvent is left in the image structure, the peripheral structure is firm and therefore the image can be fixed without the occurrence of image defects.

If the polymer micro-particles have an average diameter substantially same as that of the coloring material particles, the coloring material particles and the polymer micro-particles are liable to be sparsely distributed in the image structure before carrying out the heating and fixing process, and therefore it is not possible to obtain an image structure having sufficient strength. Moreover, variation occurs in the size of the gaps, and not only is the residual solvent distributed in a non-uniform fashion, but furthermore an accordingly large amount of residual solvent will be present in parts where the gaps are large in size. Hence, since the solvent is not dried completely in the heat treatment process, then the image structure is liable to be broken down by external impacts, such as rubbing of the surface, and therefore image defects arise. In particular, unnatural blank areas appear in the solid image regions, or the like. Furthermore, even if the residual solvent were to be removed completely, if the volume of the gaps is large, then due to the extremely rapid progress of the drying process, part of the solid particle component is drawn off when the solvent is dried and the image itself contracts before the gaps are filled in by the softened polymer, thus leading to the occurrence of unnatural blank regions in the image. Furthermore, if the actual surface area of the image is small, then the whole image contracts and the overall image becomes smaller in size. This phenomenon becomes more liable to occur, the more liable the polymer micro-particles are to forming a film, in other words, the lower the softening point. In order to prevent the occurrence of this phenomenon, the softening point (Tc) of the polymer micro-particles is set in the range of 45°C through 120°C in the above-aspect of the present invention.

Furthermore, by mixing together particles of different sizes in the liquid, there is no sudden increase in the viscosity of the ink due to the viscosity reducing effect (Mooney equation) in the liquid, and therefore the amount of solid component contained in the ink, in other words, the allowable amount of polymer component, can be increased, which is beneficial in terms of image fixing.

Moreover, in the above-aspect of the present invention, since the softening point (Tc) of the polymer micro-particles ranges from 45°C to 120°C, even if the ambient operating temperature of the apparatus is equal to or greater than room temperature, then it is possible to set the temperature to a high range without the polymer micro-particles forming a film in the vicinity of the nozzles, and contraction of the image due to fusion can be prevented.

By using the polymer micro-particles that have the viscoelastic character satisfying the conditions of $\log G'1 - \log G'2 \geq 2$ and $\log G'2 \leq 5$ and by carrying out heat treatment at a temperature equal to or greater than the softening point of the polymer micro-particles, it is possible to change the viscoelastic properties of the polymer micro-particles greatly before and after heating, and hence the ink composition can be fixed onto the recording medium by heat treatment.

Preferably, the one of the coloring material particles and the polymer micro-particles has a particle diameter distribution broader than that of the other of the coloring material particles and the polymer micro-particles.

In this aspect of the present invention, since the one of the coloring material particles and the polymer micro-particles (that has a volume-average diameter that is 1.3 or more times larger than that of the other) has a particle diameter distribution broader than that of the other of the coloring material particles and the polymer micro-particles, then the particles having a small volume-average particle diameter readily fill in the gaps between the particles having a large volume-average particle diameter, and therefore it is possible to obtain sufficient image strength. The particle diameter distribution is determined by volume-average particle diameter Mv/number-average particle diameter Mn.

Preferably, the above-described inkjet recording method further includes the step of applying a treatment liquid after or before the step of depositing the droplets of the ink composition, the treatment liquid aggregating the coloring material particles and the polymer micro-particles to form the ink image.

In this aspect of the present invention, the treatment liquid which causes aggregation of the color material particles and the polymer micro-particles is applied before or after the ink droplet ejection step, and therefore it is possible to improve the aggregating force of the coloring material particles and polymer micro-particles. Consequently, it is possible to achieve higher density in the particle layer, and therefore a stronger image structure can be achieved.

Preferably, the ink image is formed on an intermediate transfer body; and the above-described inkjet recording method further includes the step of transferring the ink image from the intermediate transfer body to a recording medium.

In this aspect of the present invention, since the ink image is recorded onto a recording medium while being compressed in the transferring step, then high density of the particle layer can be achieved in the transferring step and therefore it is possible to obtain a stronger image structure.

According to the present invention, by preventing non-uniformities in the image strength caused by non-uniformities in drying resulting from non-uniform distribution of the residual solvent, then it is possible to ensure the fixing properties of the image onto the recording medium. Furthermore, it is possible to provide an inkjet image recording method in which the occurrence of image defects such as image contraction and blank portions in solid image areas caused by the dual factors of the excessive occurrence of gaps and the coalescence of the particles can be suppressed, as well as improving ejection reliability.

## BRIEF DESCRIPTION OF THE DRAWINGS

The nature of this invention, as well as other objects and advantages thereof, will be explained in the following with reference to the accompanying drawings, in which like reference characters designate the same or similar parts throughout the figures and wherein:

Fig. 1 is a schematic drawing of an inkjet recording apparatus of a transfer type used in carrying out an inkjet recording method according to an embodiment of the present invention;

Fig. 2 is a schematic drawing of an inkjet recording apparatus of a direct recording type which shows a further example of an apparatus for carrying out the inkjet recording method according to the present invention;

Figs. 3A to 3D are diagrams showing the relationship between the evaluation of image deformation and the image after transfer.

## DETAILED DESCRIPTION OF THE PREFERRED EMBODIMENTS

Firstly, the ink composition (hereinafter, also called "ink") and the treatment liquid used in the present invention will be described, and then the inkjet recording method according to an embodiment of the present invention will be described.

Ink composition

The ink composition usable in the present invention contains at least coloring material particles, polymer particles (polymer micro-particles), an organic solvent, and water.

<Coloring material particles>

The particles of coloring material used in the ink may be pigment particles or a combination of dye and pigment. From the viewpoint of imparting weatherproofing properties to the recorded image, pigment particles are desirable. Of pigments, it is particularly desirable to use a pigment which is dispersed by a dispersant, a self-dispersing pigment, a pigment in which the surfaces of the pigment particles are covered with a polymer (microcapsule pigment), or a polymer grafted pigment. There are no particular restrictions on the polymer used in the microcapsule pigment, but it is desirable to use a polymer compound having self-dispersing properties or solubility in water, and having an anionic group.

The polymer used for the microcapsule pigment is self-dispersing or soluble, itself. Alternatively, it is possible to use a polymer that is not self-dispersing or soluble for the microcapsule pigment, and to modify the polymer so as to be self-dispersed or soluble. For example, it may be a polymer having an introduced carboxyl group, sulfonic acid group, or phosphonic acid group or another anionic group, by neutralizing with an organic amine or alkali metal. Moreover, it may also be a polymer into which one or two or more anionic groups of the same type or different types have been introduced. In the present embodiment, it is desirable to use a polymer which has been neutralized by means of a salt and which contains an introduced carboxyl group.

There are no particular restrictions on the pigment used in the present embodiment, and specific examples of orange and yellow pigments are: C. I. Pigment Orange 31, C. I. Pigment Orange 43, C. I. Pigment Yellow 12, C. I. Pigment Yellow 13, C. I. Pigment Yellow 14, C. I. Pigment Yellow 15, C. I. Pigment Yellow 17, C. I. Pigment Yellow 74, C. I. Pigment Yellow 93, C. I. Pigment Yellow 94, C. I. Pigment Yellow 128, C. I. Pigment Yellow 138, C. I. Pigment Yellow 151, C. I. Pigment Yellow 155, C. I. Pigment Yellow 180, and C.I. Pigment Yellow 185.

Specific examples of red and magenta pigments are: C. I. Pigment Red 2, C. I. Pigment Red 3, C. I. Pigment Red 5, C. I. Pigment Red 6, C. I. Pigment Red 7, C. I. Pigment Red 15, C. I. Pigment Red 16, C. I. Pigment Red 48:1, C. I. Pigment Red 53:1, C. I. Pigment Red 57:1, C. I. Pigment Red 122, C. I. Pigment Red 123, C. I. Pigment Red 139, C. I. Pigment Red 144, C. I. Pigment Red 149, C. I. Pigment Red 166, C. I. Pigment Red 177, C. I. Pigment Red 178, and C.I. Pigment Red 222.

Specific examples of green and cyan pigments are: C. I. Pigment Blue 15, C. I. Pigment Blue 15:2, C. I. Pigment Blue 15:3, C. I. Pigment Blue 16, C. I. Pigment Blue 60, and C.I. Pigment Green 7.

Specific examples of a black pigment are: C.I. Pigment Black 1, C.I. Pigment Black 6, and C.I. Pigment Black 7.

The percentage (concentration) of the coloring material particles contained in the ink composition used in the present invention may be set to an optimal value in accordance with the particles of coloring material used, but a desirable range is between 0.1 wt% and 40 wt% with respect to the total weight of the ink composition. More desirably, it is 1 wt% to 30 wt% and even more desirably, 2 wt% to 20 wt%. If the concentration of the coloring material particles is too low, then sufficient image density is not obtained, and if on the other hand, the concentration is too high, then the ink viscosity becomes too high.

The volume-average diameter of the pigment particles is not subject to particular restrictions provided that the ink ejection characteristics are not impaired, but a range of 30 nm through 200 nm is particularly desirable. Reducing the size of the pigment particles can be expected to produce beneficial effects in improving the color reproduction and transparency of the obtained image on the recording medium, but on the other hand, there are demerits in terms of reduction in light resistance and increase in the viscosity of the ink, for instance, and therefore it is desirable to adjust the particle diameter in the range stated above.

<Polymer micro-particles>

It is desirable to add polymer micro-particles which do not include a coloring material to the ink composition which is used in the present invention. In particular, it is possible to obtain an ink composition having high dispersibility and stability by adding anionic polymer micro-particles in the ink composition.

A desirable mode for adding the polymer component used in the present invention is one where polymer micro-particles constituted of a polymer component only are dispersed in the ink. Furthermore, the polymer micro-particles used in the ink may have the same composition as the coating polymer of the above-described microcapsule pigment in which the pigment particle is coated with the coating polymer. In this case, a beneficial effect can be obtained in improving resistance to rubbing and fixing properties due to the bonding of the polymer micro-particles and the coating polymer of the microcapsule pigments.

The dispersion state of the polymer particles in the ink is not limited to an emulsion state of the polymer particles

in the ink, and the resin may also be dissolved halfway, or included in the form of a colloidal dispersion, in the ink.

Moreover, the polymer particles may be dispersed by using an emulsifier, or the polymer particles may be dispersed without using any emulsifier. For the emulsifier, a surface active agent of low molecular weight may be used, and it is also possible to use a surface active agent of high molecular weight. It is also desirable to use a capsule type of polymer particles having an outer shell composed of acrylic acid, methacrylic acid, or the like (core-shell type of polymer particles in which the core portion is coated with the outer shell portion that has a composition different from that of the core portion).

The polymer particles dispersed without any surface active agent of low molecular weight are known as the soap-free latex, which includes polymer particles with no emulsifier or polymer particles with a surface active agent of high molecular weight. For example, the soap-free latex includes polymer particles that use, as an emulsifier, the above-described polymer having a water-soluble group, such as a sulfonic acid group or carboxyl group (a polymer with a grafted water-soluble group, or a block polymer obtained from a monomer having a water-soluble group and a monomer having an insoluble part).

It is especially desirable in the present embodiment to use the soap-free latex compared to other type of resin particles obtained by polymerization using an emulsifier, since there is no possibility that the emulsifier inhibits the film formation of the polymer particles, or that the free emulsifier moves to the surface after film formation of the polymer particles and thereby degrades the adhesive properties or the fixing properties between the recording medium and the image film (ink image) in which the coloring material particles and the polymer particles are combined. Furthermore, it is also possible to prevent deterioration of the water resistance.

Possible examples of the component of the polymer micro-particles which is added to the ink composition are: acrylic resin, vinyl acetate resin, styrene - butadiene resin, styrene isoprene resin, vinyl chloride resin, acryl - urethane resin, styrene - acrylic resin, ethylene - acrylic resin, butadiene resin, styrene resin, acrylonitrile resin, ionomer resin, or the like, but it is not limited to these. Of these, a material having a carboxylic group with a low degree of disassociation is more desirable, from the viewpoint of imparting good image fixing properties.

The hydrophilic anionic group may be any group which has a negative electric charge, but desirably, it is a phosphoric acid group, phosphonic acid group, phosphinic acid group, sulphuric acid group, sulfonic acid group, sulfinic acid group or carboxylic group, and of these, a carboxylic group is more desirable from the viewpoint of imparting good image fixing properties.

Furthermore, when the ink is made to aggregate by means of a treatment liquid as described below, then the polymer micro-particles contained in the ink desirably have an amphoteric structure which includes both an anionic part and a cationic part. When the pH becomes 5 or lower due to the treatment liquid, then the polymer micro-particles undergo a polarity conversion from negative to positive, an attracting force arises between the polymer and the pigment, and hence the aggregating force becomes stronger and the speed of aggregation can be accelerated.

Desirably, the amount of polymer micro-particles added to the ink is 2 wt% to 40 wt% and more desirably, 4 wt% to 20 wt%. If the added amount is less than 2 wt%, then the beneficial effects of the present invention are insufficient. On the other hand, if the added amount is greater than 40 wt%, then the ink viscosity becomes too great and the ejection reliability is impaired.

The weight ratio of the coloring material particles to the added amount of polymer micro-particles is desirably between 2:1 and 1:10, and more desirably, 1:1 to 1:5. If the weight ratio of the coloring material particles to the added amount of polymer micro-particles is greater than 2:1 (in other words, if the amount of the polymer micro-particles is too small), then the beneficial effect caused by fusing of the polymer micro-particles is insufficient and a satisfactory effect will not be obtained in terms of wear resistance. On the other hand, if the ratio of the particles of coloring material to the added amount of polymer micro-particles is less than 1:10 (in other words, if the amount of the coloring material particles is too large), the viscosity of the ink becomes too high and the ejection reliability and other factors deteriorate, which is undesirable.

In view of the adhesive force when the polymer micro-particles are softened, it is desirable that the molecular weight of the polymer micro-particles added to the ink composition should be 5,000 or greater. If the molecular weight is less than 5,000, then sufficient beneficial effects are not obtained in terms of the wear resistance and fixing properties of the image.

Furthermore, in the present embodiment, it is also possible to use a mixture of a plurality of types of polymer micro-particles in the ink composition. The plurality of types of polymer micro-particles may be dispersed respectively and separately in the ink composition, or they may adopt a core-shell structure including a core part and a shell part. Moreover, apart from a mode in which the shell part covers the core part completely, it is also possible to adopt a mode in which the shell part covers a portion of the core part. Furthermore, it is also possible to adopt a mode where a layer of second polymer micro-particles is covered in dispersed island shapes inside a layer of first polymer micro-particles, or to adopt a mode in which second polymer micro-particles are dispersed in a dotted fashion on the surface layer formed by first polymer micro-particles.

In the case of a non-crystalline polymer, the softening point indicates the glass transition temperature, and the

melting point corresponds to the temperature at which the crystalline polymer changes from solid state to liquid state, although they are not limited to these temperatures.

The softening point of the polymer micro-particles is equal to or greater than 45°C and equal to or lower than 120°C. If the softening point of the polymer micro-particles is too low, then the polymer micro-particles become excessively liable to form a film, and therefore the polymer micro-particles are dragged away when the solvent is dried, giving rise to unnatural blank regions due to contraction of the actual image. Furthermore, if the actual surface area of the image is small, then the whole image contracts and the image size becomes smaller. In the present embodiment, since the softening point of the polymer micro-particles is equal to or greater than 45°C and equal to or lower than 120°C, then even if the ambient operating temperature of the apparatus is equal to or higher than room temperature, a high temperature can be set without the polymer micro-particles forming a film in the vicinity of the nozzles, and therefore it is possible to prevent contraction of the image due to fusion of the polymer micro-particles. The softening point is desirably equal to or greater than 45°C and equal to or lower than 100°C, and more desirably, it is equal to or greater than 45°C and equal to or lower than 75 °C.

There are various methods for measuring the softening point and the melting point, but in the present invention, a measurement method using a DSC apparatus is employed.

The viscoelastic character of the polymer micro-particles according to the present invention satisfies equations (1) and (2) below:

$$\log G'1 - \log G'2 \geq 2 \qquad (1)$$

$$\log G'2 \leq 5 \qquad (2),$$

where G'1 is the storage elastic modulus at T1 (°C), G'2 is the storage elastic modulus at T2 (°C), T1 is a temperature that is lower than the softening point of the polymer micro-particles by 20 °C, and T2 is a temperature that is higher than the softening point of the polymer micro-particles by 20 °C.

The viscoelastic properties of this kind can be controlled to desired properties by means of the monomer materials which make up the polymer component, and their compositional ratio, molecular weight, distribution, and the like.

The storage elastic modulus G' of the polymer micro-particles can be measured by means of a rheometer. The storage elastic modulus is measured by freeze drying a dispersed material of the polymer micro-particles to created a powder and then measuring the properties using a viscoelastic properties measurement apparatus Physica MCR301 made by Anton Paar. As for the measurement conditions, the powdered polymer is raised to a temperature of 150°C and the properties can then be measured as the polymer cools from 150°C to 20°C at a rate of 3°C per minute, using parallel plates having a diameter of 8.0 mm, at a frequency ω of 6.28 rad/sec (1 Hz), a distortion angle of 0.1° and a gap of 1.0 mm.

Relationship between coloring material particles and polymer micro-particles

One of the coloring material particles and the polymer micro-particles has a volume-average diameter that is 1.3 or more times, and desirably 1.5 or more times and even more desirably 2.0 or more times larger than that of the other of the coloring material particles and the polymer micro-particles. For example, if the average particle diameter of the coloring material micro-particles is 1.3 or more times the average particle diameter of the polymer micro-particles, then it is possible to fill in the gaps formed between the coloring material particles by means of the polymer micro-particles, and therefore the image structure can easily be formed into a dense structure and hence sufficient image strength can be achieved.

Moreover, desirably, one of the coloring material particle and the polymer micro-particle that has a larger volume-average particle diameter has a particle diameter distribution broader than that of the other of the coloring material particle and the polymer micro-particle that has a smaller volume-average particle diameter. For example, if the volume-average particle diameter of the coloring material particles is greater than the volume-average particle diameter of the polymer micro-particles, then the particle diameter distribution of the coloring material particles is made broader than the particle diameter distribution of the polymer micro-particles. In other words, the particle diameter distribution of the polymer micro-particles is made to be a sharp distribution (uniform particle diameter) compared to the particle diameter distribution of the coloring material particles. Accordingly, since the polymer micro-particles readily fill up the gaps between the coloring material particles, then the density becomes higher and it is possible to obtain sufficient image strength.

In the foregoing description, an example has been described in which the coloring material micro-particles are

larger than the polymer micro-particles. Similarly to the above example, in a case where the polymer micro-particles are larger than the coloring material particles, the coloring material particles enter into the gaps between the polymer micro-particles and are able to reduce the volume of the gaps, and therefore similar beneficial effects can be obtained.

The method of measuring the particle diameter distribution including the volume-average particle diameter and the number-average particle diameter may employ a static light scattering method, a dynamic light scattering method, or a centrifugal sedimentation method. Of these, a dynamic light scattering method which uses a laser Doppler effect is particularly desirable since it is able to measure the particle diameter down to a small size. The particle diameter can be measured by dynamic light scattering by using a Microtrac UPA (made by Nikkiso (Co., Ltd.)), for example.

The volume-average particle diameter is the average particle diameter weighted according to the particle volume (average particle diameter weighted with the particle volume fraction), and it is obtained by finding the product of the particle diameter and the particle volume for each individual particle in a group of particles, summing these products together and then dividing this sum total by the overall volume of the particles. In other words, the volume-average particle diameter is expressed as follows:

$$Mv = \Sigma (Fi \times Mi^4)/\Sigma (Fi \times Mi^3) \quad (3),$$

where Fi is the number (fraction) of particles having a size of Mi.

The number-average particle diameter is obtained by finding the sum of the diameters of the individual particles in a group of particles, and then dividing by the total number of particles. The number-average particle diameter is expressed as follows:

$$Mn = \Sigma (Fi \times Mi)/\Sigma Fi \quad (4),$$

where Fi is the number (fraction) of particles having a size of Mi.

The relationship between the volume-average particle diameter and the number-average particle diameter is such that the volume-average particle diameter Mv is equal to or greater than the number-average particle diameter Mn (namely, volume-average particle diameter ≥ number-average particle diameter). In a group of particles which are all of exactly the same size, both values will be equal, and the ratio (volume-average particle diameter Mv/number-average particle diameter Mn) of the volume-average particle diameter Mv with respect to the number-average particle diameter Mn is 1. Furthermore, the greater the ratio of the volume-average particle diameter Mv with respect to the number-average particle diameter Mn, the broader the particle diameter distribution. The relationship between the volume-average particle diameter and the number-average particle diameter is described on page 119 of "Polymer latex chemistry", Soichi Muroi, published by Polymer Publication Society.

The particle diameter distribution (Mv/Mn) can be reduced by removing large and coarse particles in a liquid dispersion, and this distribution can be adjusted in accordance with the intended objective.

The method for removing these large and coarse particles may employ a commonly centrifugal sedimentation method, microfiltration method, or the like.

A centrifugal sedimentation method may employ a commercially available centrifugal separator. The magnitude of the applied centrifugal force is desirably set to 10 times to 1000000 times the acceleration due to gravity.

It is possible to use various types of materials for the filter employed in a microfiltration method. More specifically, possible examples of the filtering material are: cellulose, acetyl cellulose, vinylidene polyfluoride, polyether sulfone, polytetrafluoroethylene, polycarbonate, glass fibers, polypropylene, or the like. Furthermore, both a membrane filter and a depth filter are desirable as the mode of the filter. The pore size of the filter used in filtration is desirably 0.1 μm to 10 μm, and more desirably, 0.2 μm to 5 μm and even more desirably, 0.2 μm to 0.5 μm. Moreover, when carrying out filtration, it is desirable that after filtering through a filter having pores of large diameter, the material should be filtered again through a filter having pores of small diameter.

If there is a large number of large and coarse particles and the filtering properties are poor, then it is possible to improve the filtering properties by adding a dispersant to the liquid dispersion.

<u>Organic solvent</u>

From the viewpoint of preventing the blocking of nozzles in the inkjet head due to drying of the ink, it is desirable that the ink composition used in the present invention should contain an organic solvent, and in particular, an organic solvent that is soluble in water. A water-soluble organic solvent of this kind includes a moistening agent or a penetrating

agent.

Examples of the water-soluble organic solvent in the ink are: polyhydric alcohols, polyhydric alcohol derivatives, nitrous solvents, monohydric alcohols, and sulfurous solvents. Specific examples of the polyhydric alcohols are: ethylene glycol, diethylene glycol, propylene glycol, butylene glycol, triethylene glycol, 1,5-pentane diol, 1,2,6-hexane triol, and glycerin. Specific examples of the derivatives of polyhydric alcohol are: ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monobutyl ether, dipropylene glycol monobutyl ether, and an ethylene oxide adduct of diglycerin. Specific examples of the nitrous solvents are: pyrrolidone, N-methyl-2-pyrrolidone, cyclohexyl pyrrolidone, and triethanol amine. Specific examples of the monohydric alcohols are: ethanol, isopropyl alcohol, butyl alcohol, benzyl alcohol, and the like. Specific examples of the sulfurous solvents are: thio diethanol, thio diglycerol, sulfolane, and dimethyl sulfoxide. Apart from these, it is also possible to use propylene carbonate, ethylene carbonate, or the like.

In the present embodiment, a single type of the organic solvent soluble to water may be used independently. Alternatively, two or more types of the organic solvent soluble to water may be mixed and used together. The content ratio of the organic solvent soluble to water to the total weight of the ink is desirably not higher than 60 wt%. If the content ratio is higher than 60 wt%, then the viscosity of the ink may increase and the ejection characteristics from the ejection head may deteriorate.

Treatment liquid

The ink composition used in the present invention desirably employs an ink set having coloring material particles and a treatment liquid which causes the polymer micro-particles to aggregate. By using a treatment liquid, it is possible to increase the aggregating force of the coloring material particles and the polymer micro-particles, and therefore increased density of the particle layer can be achieved and a stronger image structure can be obtained.

A desirable example of the treatment liquid used in the present invention is a treatment liquid which generates an aggregated material by causing the coloring material particles and the polymer micro-particles contained in the ink composition to aggregate by altering the pH of the ink.

Furthermore, it is desirable to use a treatment liquid to which a polyvalent metal salt or a polyaryl amine has been added. These compounds may be used singly, or a combination of two or more of these compounds may be used. From the viewpoint of the cross-linking point, it is preferable to use a trivalent aluminum ion.

Furthermore, desirably, the component of the treatment liquid is selected from: phosphoric acid, methane sulfonic acid, polyacrylic acid, acetic acid, glycol acid, malonic acid, malic acid, malleinic acid, ascorbic acid, succinic acid, glutaric acid, fumaric acid, citric acid, tartaric acid, lactic acid, sulfonic acid, orthophosphoric acid, pyrrolidone carboxylic acid, pyrone carboxylic acid, pyrrole carboxylic acid, furan carboxylic acid, pyridine carboxylic acid, cumaric acid, thiophene carboxylic acid, nicotinic acid, or derivatives of these compounds, or salts of these, or the like.

In the present invention, it is possible to apply the treatment liquid before the deposition of the ink deposition, or to apply the treatment liquid after the deposition of ink droplets.

From the viewpoint of the aggregating performance with respect to the ink composition, the treatment liquid of the present invention desirably has a pH of 1 to 6, more desirably, a pH of 2 to 5, and particularly desirably, a pH of 3 to 5.

Inkjet recording method and apparatus

<First embodiment>

Next, an inkjet recording apparatus for implementing the inkjet recording method according to the present invention will be described.

Fig. 1 is a diagram showing one example of the overall composition of an inkjet recording apparatus of a transfer type.

As shown in Fig. 1, the inkjet recording apparatus 10 principally comprises: an intermediate transfer body 12, a treatment liquid deposition unit 14, an ink ejection unit 16, and a transfer unit 18, and it is also provided with a solvent removal unit 20, a cleaning unit 22, and an image fixing unit 24.

The intermediate transfer body 12 is composed of an endless belt having a prescribed width, and the intermediate transfer body 12 is wound about a plurality of rollers 26. In the present embodiment, an example in which the four rollers 26A to 26D are used is described. The intermediate transfer body 12 is not limited to being an endless belt, and it may also employ a method where a cut-sheet intermediate transfer body is conveyed by a conveyor belt, or it may use a drum-shaped member.

The motive force of a motor (not illustrated) is transmitted to at least one main roller of the plurality of rollers 26, and by the driving of this motor the intermediate transfer body 12 is caused to rotate about the outer side of the

rollers 26 (26A to 26D) in the counter-clockwise direction in Fig. 1 (hereinafter, called the "rotational direction of the transfer body").

A recording head (treatment liquid head) 30S corresponding to the treatment liquid is provided in the treatment liquid deposition unit 14. The treatment liquid head 30S ejects treatment liquid from an ejection face which opposes the intermediate transfer body 12. Accordingly, droplets of the treatment liquid are deposited onto the recording surface 12a of the intermediate transfer body 12. The treatment liquid deposition unit 14 is not limited to a method which ejects treatment liquid from a head having nozzles, and may also employ an application method which uses an application roller. With this application method, treatment liquid can be applied readily onto virtually the whole surface of the intermediate transfer body 12 including the image region where the ink droplets are deposited. In this case, it is desirable that the thickness of the treatment liquid on the intermediate transfer body 12 should be 1 μm to 5 μm. It is also possible to provide a device which makes the thickness of treatment liquid on the intermediate transfer body 12 uniform. For example, there is a method which uses an air knife, and a method in which a member having a sharp angle is arranged so as to create a gap corresponding to the designated value of the thickness of the treatment liquid with respect to the intermediate transfer body 12. In Fig. 1, the treatment liquid deposition unit 14 is provided before the ink ejection unit 16, but it may also be arranged behind the ink ejection unit 16. Even if the treatment liquid deposition unit 14 is arranged behind the ink ejection section 16, it is possible to obtain similar beneficial effects to a case where the treatment liquid deposition unit 14 is arranged before the ink ejection unit.

The ink ejection unit 16 is arranged next to the treatment liquid deposition unit 14. The ink ejection unit 16 comprises recording heads (ink heads) 30K, 30C, 30M and 30Y which correspond to the respective colors of ink of black (K), cyan (C), magenta (M) and yellow (Y). Respective inks which satisfy the ink composition conditions of the present invention are stored in respective ink storage units (not shown) which correspond to the inks of respective colors, and these inks are supplied to the respective recording heads 30K, 30C, 30M and 30Y.

The ink heads 30K, 30C, 30M and 30Y respectively eject the inks of the corresponding colors, from an ejection surface which opposes the intermediate transfer body 12. Accordingly, the inks of the respective colors are deposited onto the recording surface 12a of the intermediate transfer body 12.

Each of the treatment liquid head 30S and the ink heads 30K, 30C, 30M and 30Y is a full line head in which a plurality of ejection ports (nozzles) are formed through the maximum recording width of the image formed on the intermediate transfer body 12. Therefore, it is possible to record images at high speed on the intermediate transfer body 12, in comparison with a serial type of head which performs recording while scanning a short shuttle head back and forth in the breadthways direction of the intermediate transfer body 12 (the front to back direction with respect to the plane of the drawing in Fig. 1). Of course, the present invention is also suitable for a serial system which has a relatively high recording speed, for example, a one-pass recording system which forms one line in one scanning action.

In the present embodiment, all of the respective recording heads (the treatment liquid head 30S, and the ink heads 30K, 30C, 30M and 30Y) have the same structure, and hereinafter, the reference numeral 30 is used to indicate a representative example of these recording heads.

When the treatment liquid has been deposited onto the intermediate transfer body 12 from the treatment liquid head 30S, the region of the intermediate transfer body 12 on which the treatment liquid has been deposited is moved sequentially to directly below the ink heads 30K, 30C, 30M and 30Y, due to the rotation of the intermediate transfer body 12, and the inks of the corresponding colors are ejected respectively from the ink heads 30K, 30C, 30M and 30Y.

Desirably, the treatment liquid deposition volume and the ink deposition volume are adjusted in accordance with requirements. For example, it is possible to change the amount of treatment liquid deposited in accordance with the type of the recording medium to which the image is transferred, in order to adjust the viscosity and other properties of the ink aggregate which is created by the mixing of the treatment liquid and the ink. Moreover, it is also possible to include wax in the treatment agent, from the viewpoint of improving transfer properties by imparting separating characteristics or by imparting adhesive force to the interior of the ink film. More desirably, the wax is added in the form of an emulsion. Desirably, the added amount of the solid component in the emulsion is equal to or greater than 0.05 wt%, by weight ratio, with respect to the solid component in the ink, in order to obtain good separation performance and good adhesive strength inside the ink film. If the added amount is less than 0.05 wt%, then a sufficient separating effect is not obtained. As the added amount of the emulsion gradually increases, the reliability of the ink gradually declines, and therefore it is desirable that the solid component should be restricted to approximately 30 wt% with respect to the total amount of ink. The wax used may be carnauba wax, paraffin wax, microcrystalline wax, montan wax, alcohol wax, polyethylene wax, PTFE wax, synthetic acid wax, α olefin - anhydrous maleic acid copolymer, or the like. Furthermore, it is also possible to form a separating layer by depositing a separating component only, in a separate fashion, before depositing treatment agent.

The solvent removal unit 20 is arranged on the downstream side of the ink ejection unit 16 in terms of the direction of rotation of the transfer body. A solvent removal roller 32 is provided in the solvent removal unit 20 at a position corresponding to the roller 26A via the intermediate transfer body 12. The solvent removal roller 32 is made of a roller-shaped porous material, and is arranged so as to abut against the recording surface 12a of the intermediate transfer

body 12. Other possible modes are, for example, a system which removes excess solvent from the intermediate transfer body 12 by means of an air knife, or a system which evaporates off the solvent by heating. Any solvent removal system may be adopted, but desirably, a system which does not employ heat is used. In the case of a device which evaporates solvent by heating the surface of the transfer body or by applying heat to the aggregate on the transfer body, there may be cases where an excessive amount of solvent is removed by excessive heating of the aggregate, and therefore desirable viscosity cannot be maintained in the aggregate during transfer, and the transfer characteristics decline. A further concern is the effect of the heat of the intermediate transfer body on the ink ejection characteristics from the inkjet head.

In the solvent removal unit 20, the solvent on the recording surface 12a of the intermediate transfer body 12 is removed by the solvent removal roller 32. Therefore, even in cases where a large amount of the treatment liquid is deposited on the recording surface 12a of the intermediate transfer body 12, since the solvent is removed by the solvent removal unit 20, then a large amount (excessive amount) of solvent (dispersion medium) is not transferred to the recording medium 34 in the transfer unit 18. Consequently, even in a case where paper, or the like, is used as the recording medium 34, there is no occurrence of problems which are characteristic of water-based solvents, such as curling, cockling, or the like.

By removing excess solvent from the ink aggregate by means of the solvent removal unit 20, the ink aggregate can be condensed and the internal aggregating force can be raised further. By this means, the coalescence of the resin particles contained in the ink aggregate is promoted effectively, and a stronger internal aggregating force can be imparted to the aggregate before the transfer step is performed. Moreover, it is possible to impart good fixing properties and luster to the image after transfer to the recording medium, due to the effective condensation of the ink aggregate by removal of the solvent.

There is no particular need to remove all of the solvent by the solvent removal unit 20. If the ink aggregate is condensed excessively by removing the solvent excessively, then the aggregating force between the ink aggregate and the transfer body becomes too strong, and therefore a very large pressure is needed for transfer, which is not desirable. Rather, in order to maintain a viscous elasticity which is suitable for transfer, it is desirable to leave a small amount of solvent. One of the beneficial effects obtained by leaving a small amount of residual solvent is that since the ink aggregate is hydrophobic, and the non-volatile solvent component (principally, the organic solvent, such as glycerine) is hydrophilic, then the ink aggregate and the residual solvent component separate after carrying out solvent removal, and a thin layer of liquid composed of the residual solvent component is formed between the ink aggregate and the intermediate transfer body. Consequently, the adhesive force of the ink aggregate to the transfer body becomes weak, which is beneficial for improving transfer characteristics.

The transfer unit 18 is arranged on the downstream side of the solvent removal roller 20 in terms of the direction of rotation of the transfer body. A pressurization and heating roller 36 is provided in the transfer unit 18 at a position which opposes the roller 26B, via the intermediate transfer body 12. A heater 37 is provided inside the pressurization and heating roller 36, in such a manner that the temperature of the outer circumferential surface of the pressurization and heating roller 36 is raised by this heater 37. The recording medium 34 is conveyed from the left-hand side to the right-hand side in Fig. 1, so as to pass between the intermediate transfer body 12 and the pressurization and heating roller 36. When the recording medium 34 passes between the intermediate transfer body 12 and the pressurization and heating roller 36, then the front surface of the recording medium 34 makes contact with the recording surface 12a of the intermediate transfer body 12, and pressurization and heating is carried out by the pressurization and heating roller 36, from the rear surface of the recording medium 34. Thereby, the surface temperature in the transfer section of the intermediate transfer body 12 is raised to the transfer temperature and the image of dots of ink aggregate formed on the intermediate transfer body 12 is softened to an appropriate softened state. The dot image formed on the recording surface 12a of the intermediate transfer body 12 is transferred to the recording medium 34, in this state. A desirable structure is one where the heating section is limited only to the transfer section of the intermediate transfer body 12. If this structure is adopted, it is possible to prevent excessive thermal load caused by heating the whole surface of the transfer body, and to prevent excessive removal of the solvent component included in the ink aggregate. Moreover, by heating the ink aggregate in a transfer unit 18, almost all of the solvent contained in the ink aggregate is removed, and due to fusion of the resin which is promoted by the combined effect of the physical condensation of the ink aggregate caused by pressurization, it is possible to impart an even stronger internal aggregating force to the ink aggregate, in the short period of time from immediately before the transfer step until the execution of transfer, in the region where the intermediate transfer body 12 makes contact with the pressurization and heating roller 36.

As described above, the transfer temperature is the surface temperature of the transfer section of the intermediate transfer body 12, and the surface temperature of the pressurization and heating roller 36 is set to a higher temperature than this transfer temperature, in order to take account of the fact that the intermediate transfer body 12 is heated via the recording medium. In this case, it is also possible to provide a recording medium heating device which applies a heating process to the recording medium 34 before the recording medium 34 is conveyed to the transfer unit 18. It is possible to achieve effective thermal conduction during transfer by making the recording medium reach a desired transfer

temperature when it makes direct contact with the image of dots of the ink aggregate. Furthermore, by previously heating the recording medium 34, the ink image is melted immediately upon transfer and enters into the indentations and capillaries of the surface of the recording medium, thereby producing an anchoring effect due to the increased contact surface area. As a result of this anchoring effect, the adhesive force between the recording medium 34 and the ink aggregate is enhanced and transfer is carried out in a satisfactory fashion. Furthermore, it is also possible to improve the fixing properties of the image after transfer to the recording medium. Moreover, it is possible to improve the smoothness of the image, and this has a beneficial effect in imparting granularity and luster to the image. Desirably, the heating temperature of the recording medium 34 can be adjusted freely in accordance with the type of recording medium 34.

If there are a large number of indentations (undulations) in the surface of the paper caused by pulp fibers, as in the case of normal paper, high-grade paper, or the like, then a strong anchoring effect can be expected between the ink image and the surface of the recording medium, and in this case, by adjusting the viscosity of the ink aggregate through controlling the heating temperature of the surface of the recording medium which makes contact during direct transfer, as well as the heating temperature in the heating unit, it is possible to achieve an optimal adhesive force in the ink image and hence to impart good fixing properties of the image to normal paper, high-grade paper, or the like. For example, a recording medium 34 having a smooth surface, such as coated paper, has a high thermal conduction efficiency in the surface portion, and therefore the heating temperature is set to a relatively low temperature. On the other hand, in the case of a recording medium 34 having surface indentations, such as high-grade paper, an air layer is liable to be interposed between the paper and the ink image, and therefore it is desirable to set the heating temperature to a relatively higher temperature, since this can be expected to produce a good anchoring effect due to the increase in the adhesive force of the polymer component.

Furthermore, when a solvent removal process is not carried out before transfer, since the solvent can be removed by heating in a short period of time, then there is not much of a problem with the transfer rate, but if a solvent removal step is carried out, then the absolute volume of solvent that is to be evaporated off in the transfer unit is only small, and therefore, not only is the condensation effect even more effective, but the thermal load during transfer can also be reduced. Moreover, by achieving effective condensation of the ink aggregate by heating in the transfer unit 18, it is possible to impart good fixing properties and luster to the image after transfer to the recording medium 34.

Furthermore, it is also possible to adjust the temperature and pressure during transfer freely, to suitable conditions, in accordance with the recording medium 34 and the printing conditions, and the like.

Moreover, it is also possible to adopt, on the surface of the intermediate transfer body, a structure having a surface layer which has separating properties, according to requirements. If the surface of the transfer body has been imparted with separating properties, then it has low surface energy and high separating properties, and therefore it is possible to achieve a high transfer rate. In the present invention, it is possible to obtain a satisfactory transfer rate even if separating properties are not imparted in particular, but from the viewpoint of the cleaning load, and the like, there is no particular problem even if separating properties are imparted to the surface of the intermediate transfer body. Here, a surface having separating properties as referred to in the present invention means a surface having a critical surface tension of 30 mN/m or less, or an angle of contact with respect to water of 75° or above.

Desirable materials for use as the surface layer of the intermediate transfer body 12 are, for example, commonly known materials such as: a polyurethane resin, a polyester resin, a polystyrene resin, a polyolefin resin, a polybutadiene resin, a polyamide resin, a polyvinyl chloride resin, a polyethylene resin, a fluorine resin, a polyimide resin, and the like.

The cleaning unit 22 is arranged on the downstream side of the transfer unit 18 in terms of the direction of rotation of the transfer body and to the upstream side of the treatment agent deposition unit 14 in terms of the direction of rotation of the transfer body. A cleaning roller 38 is provided in the cleaning unit 22 at a position opposing the roller 26C via the intermediate transfer body 12, being disposed so as to abut the recording surface 12a of the intermediate transfer body 12, and the cleaning roller 38 removes the residual material from the recording surface 12a of the intermediate transfer body 12 after transfer.

Possible modes of the cleaning roller 38 are: a system where the cleaning roller 38 is made of a soft and porous member, and cleans the surface of the intermediate transfer body (recording surface 12a) while being impregnated with a cleaning liquid by means of a cleaning liquid application device; a system where a brush is provided on the surface of the roller and dirt on the surface of the intermediate transfer body is removed by the brush while applying cleaning liquid to the surface of the intermediate transfer body; or a system where a flexible blade is provided on the roller surface and the residual material on the surface of the intermediate transfer body (the residual traces of the ink aggregate) are swept away by this blade; or the like. If the linear speed of the surface of the cleaning roller 38 is set so as to be slower or faster than the linear speed of the surface of the intermediate transfer body, rather than being equal to same, then it is possible to enhance the rate of removing the residual material. A shearing force is generated on the surface of the intermediate transfer body in accordance with the speed differential between the surface of the cleaning roller 38 and the surface of the intermediate transfer body, and therefore the residual material can be removed efficiently.

In the present invention, an image fixing unit 24 is provided in order to impart stronger fixing properties to the recording medium after transfer.

The image fixing unit 24 is disposed on the recording medium output side of the transfer unit 18 (the right-hand side in Fig. 1). In the image fixing unit 24, two fixing rollers 40A and 40B are provided on the front and rear surfaces of the recording medium 34, and by pressurizing and heating the image transferred to and formed on the recording medium 34 by the fixing rollers 40A and 40B, it is possible to improve the fixing properties of the recorded image on the recording medium 34. Desirably, the fixing rollers 40A and 40B are a pair of rollers which consist of one pressurizing and heating roller and one heating roller, but the fixing rollers 40A and 40B are not limited to these.

Furthermore, in the present invention, it is also possible to provide a device (not illustrated) which applies a heating process to the recording medium 34 before the recording medium 34 is conveyed to the transfer unit 18.

It is possible to perform effective thermal conduction in a shorter period of time during the transfer nip process, by previously setting the recording medium 34 which makes direct contact with the ink aggregate to a desired transfer temperature. Moreover, the ink aggregate and the surface of the recording medium are brought into contact by previously setting the recording medium to a desired transfer temperature, rather than a case where the heating is performed during the transfer nip process only. This temperature can be adjusted freely in accordance with the type of the recording medium 34, and it is also possible to control the viscoelastic character of the ink aggregate by controlling this temperature.

If there are a large number of indentations in the surface of the paper caused by pulp fibers, as in a case where the recording medium 34 is normal paper, high-grade paper, or the like, then a strong anchoring effect can be expected between the ink aggregate and the surface of the recording medium, and in this case, by adjusting the viscosity of the ink aggregate through controlling the heating temperature of the surface of the medium which makes contact during direct transfer, as well as the heating temperature in the heating unit, it is possible to achieve an optimal viscosity of the ink aggregate and hence to impart good fixing properties of the image to normal paper, high-grade paper, or the like. Furthermore, it is also possible to impart good fixing properties after transfer to a recording medium having a flat surface, for instance if the recording medium 34 is a coated paper, by controlling the viscosity of the ink aggregate so as to be harder than in the case of a recording medium having indentations in the surface thereof.

Next, the inkjet recording method according to the present invention which records an image by using the inkjet recording apparatus having the composition described above will be explained.

Firstly, the treatment liquid is deposited on the intermediate transfer body 12 by means of the treatment liquid deposition unit 14 (step 1). In this case, the treatment liquid may be applied in the form of a thin film onto the intermediate transfer body 12 by means of an application roller instead of the treatment liquid deposition unit 14.

Next, the intermediate transfer body 12 onto which the treatment liquid has been deposited is conveyed so as to be positioned under the recording head 16 by the belt conveyor and the ink according to the present invention is ejected as droplets and thereby made to contact the treatment liquid (step 2). By this means, an ink image formed of the ink aggregate is created by mixing the treatment liquid and the ink together.

Next, the intermediate transfer body 12 on which the ink image has been formed is conveyed by the belt conveyor toward the solvent removal unit 20, and the solvent on the recording surface 12a of the intermediate transfer body 12 is removed by the solvent removal roller 32 (step 3).

Next, the intermediate transfer body 12 from which the solvent has been removed is conveyed by a belt conveyor toward the transfer unit 18. While the intermediate transfer body 12 is being conveyed to the transfer unit 18, the recording medium 34 is also conveyed to the transfer unit 18 via a separate route, and the recording medium 34 is interposed between the intermediate transfer body 12 and the pressurization and heating roller 36 (which includes a heater). In this state, by heating the intermediate transfer body 12 and the recording medium 34 by means of the pressurization and heating roller 36, the surface temperature in the transfer portion of the intermediate transfer body 12 is raised to the transfer temperature (for example, 100°C), and the ink aggregate formed on the intermediate transfer body 12 is transferred to the recording medium 34 in a suitably softened state (step 4).

Thereupon, the recording medium onto which the ink aggregate has been transferred is conveyed to the image fixing unit 24 and is subjected to a heat treatment process at a temperature equal to or greater than the softening point of the polymer micro-particles in the ink composition, thereby making it possible to fix the ink aggregate onto the recording medium with a suitable image strength (Step 5).

By means of the belt conveyor, the intermediate transfer body 12 which has completed the transfer process is circulated back to the position of the treatment liquid deposition unit 14 via the cleaning unit 22, and the operations of the above-described steps 1 to 5 are repeated.

<Second embodiment>

Next, an inkjet recording method and apparatus of a direct recording type are described as a second embodiment.

Fig. 2 is a general schematic drawing of an inkjet recording apparatus of a direct recording type.

The image recording apparatus 100 shown in Fig. 2 employs a direct recording method in which an image is formed directly onto a recording medium 122.

The inkjet recording apparatus 100 comprises: a treatment liquid deposition unit 138 which deposits treatment liquid onto a recording medium 122; an ink ejection unit 112 comprising heads 112K, 112C, 112M and 112Y which eject droplets of inks of respective colors of K, C, M and Y onto the recording medium 122 on which a treatment liquid layer has been formed by depositing treatment liquid; a solvent removal unit 118 comprising a hot air supply apparatus 118A and a heating panel 118B which remove residual solvent component that is remaining on the recording medium 122 onto which droplets of the inks of respective colors of K, C, M and Y have been ejected; and an image fixing unit 123 comprising fixing rollers 123A and 123B which heats the image formed on the recording medium 122 and fixes the image to the recording medium 122.

The recording medium 122 which is output from the paper supply unit (not illustrated) is supplied to a suction belt conveyance unit 140. The suction belt conveyance unit 140 has a structure in which an endless belt 146 is wound between rollers 142 and 144, and at least the portion of the belt which opposes the treatment liquid deposition unit 138, the ink ejection unit 112, the solvent removal unit 118 and the image fixing unit 123 is composed so as to form a horizontal surface (flat surface).

The belt 146 has a greater width than the recording medium 122, and a plurality of suction apertures (not illustrated) are formed in the belt surface. As shown in Fig. 2, a suction chamber (not illustrated) is provided on the inner side of the belt 146 which is wound about the rollers 142 and 144, at a position opposing the treatment liquid deposition unit 138, the ink ejection unit 112, the solvent removal unit 118 and the image fixing unit 123. The recording medium 122 is suctioned and held on the belt 146 by creating a negative pressure by suctioning the suction chamber with a pump (not illustrated).

By transmitting the motive force of a motor (not illustrated in Fig. 2) to at least one of the rollers 142, 144 about which the belt 146 is wound, the belt 146 is driven in a counterclockwise direction in Fig. 2, and the recording medium 122 held on the belt 146 is conveyed from right to left in Fig. 2.

Since ink adheres to the belt 146 when a marginless print job or the like is performed, a belt cleaning unit (not illustrated) is disposed in a predetermined position (a suitable position outside the printing area) on the exterior side of the belt 146. Although the details of the configuration of the belt cleaning unit (not illustrated) are not shown, examples thereof include a configuration in which the belt is nipped with a cleaning roller such as a brush roller and a water absorbent roller, an air blow configuration in which clean air is blown onto the belt, or a combination of these. In the case of the configuration of nipping with the cleaning roller, if the linear velocity of the belt is made different to that of the roller, then the cleaning effect is enhanced.

A mode can also be envisaged in which a roller and nip conveyance mechanism is used instead of the suction belt conveyance unit 140, but this is problematic because if the print region is conveyed by a roller and nip mechanism, the roller makes contact with the printing surface of the paper immediately after printing and therefore the image is liable to be smudged. Consequently, it is desirable to employ suction belt conveyance which does not make contact with the image surface in the printing region, as in the present embodiment.

Similarly to the first embodiment, it is possible to employ a composition including an application roller or to employ an inkjet head as the treatment liquid deposition unit 138. Moreover, it is also possible to use a composition similar to that of the first embodiment for the ink ejection unit 112.

Next, the solvent in the ink composition is removed by the solvent removal unit 118 which is provided to the downstream side of the ink ejection section 112. In Fig. 2, the solvent is removed by being heated by the hot air flow generated by the hot air supply apparatus 118A from the upper surface of the applied film, and by the heating panel 118B which is provided on the opposite side of the recording medium 122 from the applied film. The present invention is not limited to these examples, and it is also possible to remove the solvent by means of a solvent removal roller or a heating roller.

Next, the image fixing unit 123 is fixed onto the recording medium 122 by heating and pressurizing the ink droplets which have been ejected onto the recording medium 122. It is also possible to adopt a composition similar to that of the first embodiment for the image fixing unit. Furthermore, in a similar fashion, the heating conditions are set to a temperature equal to or higher than the softening point of the polymer micro-particles contained in the ink composition.

The constituent elements which are omitted from the illustration in Fig. 2 include: a decurling unit which removes curl in the recording medium 122 supplied form the paper supply unit; a cutter which cuts the recording medium to a prescribed size if a long recording medium (roll-shaped recording medium) is used, and the like.

The inkjet recording apparatus 100 shown in Fig. 2 has particularly beneficial effects when using a medium having non-permeable properties (non-permeable medium) as the recording medium 122 with respect to the treatment liquid and ink. To give possible examples of a non-permeable medium, there are coated paper, resin films, such as OHP film, metal sheet, and the like. The applicability of the recording medium 122 is not limited to a medium having non-permeable properties, and it is also possible to use a medium having poor permeability compared to a medium having permeable properties, such as normal paper.

EXAMPLES

The present invention is described more specifically below with reference to practical examples, but the present invention is not limited to these examples.

Manufacture of the pigment dispersion liquid

(Pigment dispersion A)

A solution comprising 6 parts by weight of styrene, 11 parts by weight of stearyl methacrylate, 4 parts by weight of styrene macromer AS-6 (made by Toa Gosei), 5 parts by weight of "Premmer" PP-500 (made by NOF Corp.), 5 parts by weight of methacrylic acid, 0.05 parts by weight of 2-mercapto ethanol, and 24 parts by weight of methylethyl ketone was prepared in a reaction vessel.

On the other hand, a mixed solution was prepared by introducing, into a titration funnel, 14 parts by weight of styrene, 24 parts by weight of stearyl methacrylate, 9 parts by weight of styrene macromer AS-6 (made by Toa Gosei), 9 parts by weight of "Premmer" PP-500 (made by NOF Corp.), 10 parts by weight of methacrylic acid, 0.13 parts by weight of 2-mercapotoethanol, 56 parts by weight of methylethyl ketone, and 1.2 parts by weight of 2,2' - azobis(2,4 - dimethyl valeronitrile).

Thereupon, the mixed solution inside the reaction vessel was raised to a temperature of 75°C while being agitated in a nitrogen atmosphere, and the mixed solution in the titration funnel was gradually added by titration over a period of one hour. When two hours had passed after the end of titration, a solution obtained by dissolving 1.2 parts by weight of 2,2' - azobis (2,4 - dimethyl valeronitrile) in 12 parts by weight of methylethyl ketone was added by titration over a period of 3 hours, and the mixture was matured for a further two hours at 75°C and two hours at 80°C, thereby yielding a polymer dispersant solution.

A portion of the polymer dispersant solution thus obtained was separated by removing the solvent, and the resulting solid component was diluted to 0.1 wt% with tetrahydrofuran, and then measured with a high-speed GPC (gel permeation chromatography) apparatus HLC-8220GPC, using three sequential columns : TSKgel Super HZM-H, TSKgel Super HZ4000, TSKgel Super HZ2000. The weight-average molecular weight was 25,000 when indicated as the weight of a polystyrene molecule.

5.0 g, by solid conversion, of the obtained polymer dispersant, 10.0 g of the cyan pigment, Pigment Blue 15:3 (made by Dainichi Seika Co., Ltd.), 40.0 g of methylethyl ketone, 8.0 g of 1 mol/L sodium hydroxide, 82.0 g of deionized water, and 300 g of 0.1 mm zirconia beads were supplied to a vessel, and dispersed for 6 hours at 1000 rpm in a "Ready Mill" dispersion machine (made by IMEX Co., Ltd.). The dispersion thus obtained was condensed at reduced pressure in an evaporator until the methyl ethyl ketone had been sufficiently removed, and the pigment density become 10%. The pigment particle diameter of the cyan pigment dispersion liquid A thus obtained was 77 nm.

(Pigment dispersion B)

A cyan pigment dispersion liquid B (particle diameter 103 nm) having differentiated pigment particle diameter was obtained by adjusting the dispersion conditions such as the rotational speed of the disperser or the dispersion processing time.

Synthesis of polymer micro-particles

Synthesis of styrene - butyl acrylate - acrylic acid [62/35/3 = w/w/w] (polymer micro-particles 7)

An example of the synthesis of styrene - butyl acrylate - acrylic acid [62/35/3 = w/w/w] (polymer micro-particles 7) is described as an example of the synthesis of polymer micro-particles.

8.1 g of Pionon A-43s (made by Takemoto Oil & Fat Co., Ltd.) and 236.0 g of distilled water were introduced into a 1-liter three-mouthed flask fitted with a stirrer and a reflux condenser, and the mixture was agitated while heating at 70°C in a flow of nitrogen gas. 6.2 g of styrene, 3.5 g of n-butyl acrylate, 0.3 g of acrylic acid, 1.0 g of ammonium persulfate, and 40 g of distilled water were added and agitated for 30 minutes, whereupon a monomer solution consisting of 117.8 g of styrene, 66.5 g of n-butyl acrylate and 5.7 g of acrylic acid was added by titration at a uniform rate in such a manner that titration was completed in two hours. After the end of titration, an aqueous solution of 0.5g ammonium persulfate in 20 g of distilled water was added, the mixture was agitated for four hours at 70°C, and the temperature was then raised to 85°C and agitation was continued for a further two hours. The reaction liquid was then cooled and adjusted to a pH of 7 with a 1 mol/l aqueous solution of sodium hydroxide. Then, the reaction liquid was passed through a 75 μm filter to obtain 505 g of the target polymer micro-particles 7.

The solid concentration of the polymer micro-particles thus obtained was 39.2% (solid yield rate 97.0%). The

average particle diameter was measured to be 73 nm by diluting the obtained polymer micro-particles to a suitable concentration for measurement and then measuring with a sub-micron particle analyzer N4 (made by Beckman Coulter (Inc.)).

Similarly, the polymer micro-particles 1 to 6 and 8 to 13 having respective physical properties, such as particle diameter, Tg, viscoelasticity characteristics, and so on, were synthesized by altering the monomer composition, the amount of initiator, or the amount of surfactant used, or by adding a chain transfer agent.

Table 1 is a table showing the compositions and properties of the polymer micro-particles 1-13.

The polymer particles 1-13 have the following general formula.

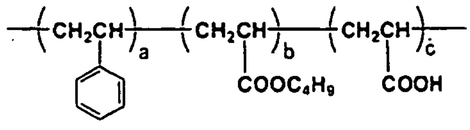

St BA AA

In the table 1, "composition ratio (St/BA/AA)" means the composition ratio among Styrene block (St), Butyl Acrylate block (BA) and Acrylic Acid block (AA) in the above general formula.

The polymer micro-particles 14 and 15 having a more monodisperse particle diameter distribution were obtained from the polymer micro-particles 6 and 8 by adjusting the Mv/Mn value of the liquid dispersion of the polymer micro-particles, by means of the rotational speed and operating time in cases where a centrifugal sedimentation method was used to filter the large and coarse particles after manufacturing the liquid dispersion of polymer micro-particles, and by means of the filter pore size and number of filtering steps using an acetyl cellulose membrane filter in cases where a microfiltration method was used.

Preparation of ink composition

Ink compositions 1-20 were created according to the compositional ratio stated below, by mixing a pigment dispersion liquid and a liquid dispersion of polymer micro-particles obtained as described above. After mixing the respective components, the large and coarse particles were removed by using a 5 μm filter to produce an ink composition. By this means, the ink compositions 1-20 were obtained. Table 2 is a table of the correspondences between the polymer micro-particles 1-15 used and the ink compositions 1-20 obtained.

| (compositional ratio of ink compositions 1- 20) | |
|---|---|
| Pigment Blue 15:3 | 4 wt% |
| Polymer micro-particles (Polymer micro-particles 1-15) | 8 wt% |
| Glycerine | 20 wt% |
| Diethylene glycol | 10 wt% |
| Olefin E1010 (made by Nisshin Kagaku Kogyo) | 1 wt% |
| Deionized water | remainder |

Preparation of treatment liquid

A treatment liquid was prepared by means of the following method. The surface tension was regulated by adjusting the addition and the added amount of fluorine-based surfactant.

| (compositional ratio of treatment liquid) | |
|---|---|
| Glycerine | 12.5 wt% |
| Diethylene glycol | 10 wt% |
| Phosphoric acid | 5 wt% |
| Olefin E1010 | 1.5 wt% |
| Deionized water | remainder |

<Ink droplet deposition test>

(Transfer method)

Using a modified Ricoh GELJET GX5000 as the inkjet recording apparatus, a solid image for evaluation was formed by ejecting droplets of the evaluation ink at a droplet ejection resolution of 1200 x 1200 dpi and a droplet ejection volume of 3.5 pl onto an intermediate transfer body to which a treatment liquid had been applied. Silicone rubber was used for the intermediate transfer body. The solvent was removed by blowing heated air at a temperature of 80°C. The image was then transferred onto Tokubishi art paper made by Mitsubishi Paper Mills Co., Ltd. at a transfer temperature of 90°C. A heating and fixing process was carried out by passing the transferred image through a fixing roller set to a heating temperature of 90°C. If the softening point of the polymer was 90°C or higher, then the heating temperature was set to be 10°C higher than the softening point. The conveyance speed was 500 mm/s.

(Direct recording method)

Using a modified Ricoh GELJET GX5000 as the inkjet recording apparatus, a solid image for evaluation was formed by ejecting droplets of the evaluation ink at a droplet ejection resolution of 1200 x 1200 dpi and a droplet ejection volume of 3.5 pl onto Tokubishi art paper. If treatment liquid was deposited, then this treatment liquid was deposited by droplet ejection onto the Tokubishi art paper, in a similar fashion to the ink, before ejecting the ink. The solvent was removed by blowing heated air at a temperature of 80°C. Thereupon, a heating and fixing process is carried out by passing the paper through a fixing roller set to a heating temperature of 90°C. If the softening point of the polymer was 90°C or higher, then the heating temperature was set to be 10°C higher than the softening point. The conveyance speed was 500 mm/s. The results are shown in Tables 3-5. The image deformation and fixing properties in Tables 3-5 were evaluated on the basis of the following criteria.

(Image deformation)

The evaluation image was observed visually and the occurrence of image deformation and image defects was evaluated. Figs. 3A to 3D show the criteria of the evaluations of image quality after transfer.

A : No image deformation and no image defects (Fig. 3A).
B : Virtually no image deformation or image defects observed (Fig. 3B).
C : Local image deformation and image defects observed (Fig. 3C).
D : Image deformation and image defects observed throughout image (Fig. 3D).

(Fixing properties)

Tape was attached to a solid image portion after the fixing process and was then peeled off at an angle of 90°. The state of adherence of the coloring material to the tape was observed (in other words, the transfer amount of the coloring material from the solid image portion to the tape was evaluated).

A : No adherence of coloring material at all.
B : Virtually no adherence of coloring material.
C : Slight adherence of coloring material in parts.
D : Severe adherence of coloring material, base surface of recording medium exposed.

<Results>

In Table 3, the results of experiments Nos. 1 to 5 show the effects of the softening point and the storage elastic modulus of the polymer micro-particles. In Comparative Example 1 which had a low softening point, the image was liable to deform at low temperatures and hence the image deformation was observed (i.e., the image deformation was evaluated to be D). Furthermore, in Comparative Example 2 which had a high softening point, a high temperature was required in order to soften the polymer micro-particles and the fixing properties were poor. On the other hand, the Practical Examples 1 to 3 where the softening point and the storage elastic modulus were within the desired ranges produced good results.

The results of experiments Nos. 6 to 9 show the effects of the ratio between the particle diameter of the pigment particles and the volume-average particle diameter of the polymer micro-particles, when using the pigment dispersion liquid A. In Comparative Example 3 where the ratio of the volume-average particle diameter was 1.1, poor results were obtained both in terms of image deformation and fixing properties. Furthermore, the results of experiments Nos. 10 to

15 show these findings by using pigment dispersion liquid B. Similarly to the case of the pigment dispersion liquid A, in Comparative Example 4 where the ratio of the volume-average particle diameter was 1.0, the results were poor both in terms of image deformation and fixing properties. On the other hand, in the practical examples where the volume-average particle diameter was 1.3 or more times larger, good results were obtained, and in particular, in Practical Examples 6 to 8 and Practical Example 11 where the ratio of the particle diameter was 2 or more times larger, especially good results were obtained.

The results of Experiments Nos. 16 to 18 show the effects of the viscoelastic characteristics of the polymer micro-particles, and in Comparative Example 5 where there is little differential in storage elastic modulus before and after the softening point, and Comparative Example 6 where the storage elastic modulus is still high even at a temperature not lower than the softening point, the results were poor in terms of image deformation and fixing properties. Conversely, good results were obtained in Practical Examples 4 and 12 which satisfy the conditions of equations (1) and (2).

The results of Experiments Nos. 19 and 20 in Table 4 show the effects of the relationship between the volume-average particle diameters of the pigment particles and the polymer micro-particles and the widths of their particle diameter distributions. Practical Examples 4 and 5 are experiments having a narrow particle diameter distribution of particles having a large volume-average particle diameter. Practical Example 13 is an example where the particle diameter distribution of particles having a large volume-average particle diameter is broadened in the sample used in Practical Example 4, and Practical Example 14 corresponds to Practical Example 5. Practical Examples 13 and 14, in which both the volume-average particle diameter and particle diameter distribution are large, show beneficial effects in terms of image deformation compared to the Practical Examples 4 and 5.

The results of Experiments Nos. 21 and 22 Table 5 show the effects of the deposition of treatment liquid and the effects of the recording apparatus. Although good results were obtained in Practical Example 4 where treatment liquid is deposited and an image is recorded onto a recording medium by transfer, good results were also obtained in Practical Example 15 where an image is recorded directly without depositing treatment liquid, and in Practical Example 16 where an image is recorded directly after depositing treatment liquid.

Experiments Nos. 1 to 20 were carried out by indirect recording in which an image was recorded onto a recording medium by transfer from an intermediate transfer body, after depositing treatment liquid.

From the foregoing, it was confirmed that by means of the present invention recording having good fixing characteristics can be performed by suppressing image formation.

It should be understood, however, that there is no intention to limit the invention to the specific forms disclosed, but on the contrary, the invention is to cover all modifications, alternate constructions and equivalents falling within the scope of the invention as expressed in the appended claims.

Table 1

| Polymer particle No. | COMPOSITIONAL RATIO (St/BA/AA) | MOLECULAR WEIGHT ($\times 10^3$) | Tc(°C) | DIAMETER (nm) |
|---|---|---|---|---|
| 1 | 52/45/3 | 268 | 39 | 31 |
| 2 | 62/35/3 | 257 | 46 | 30 |
| 3 | 77/20/3 | 290 | 89 | 30 |
| 4 | 82/15/3 | 320 | 112 | 30 |
| 5 | 87/10/3 | 283 | 123 | 36 |
| 6 | 62/35/3 | 230 | 46 | 50 |
| 7 | 62/35/3 | 286 | 47 | 73 |
| 8 | 62/35/3 | 268 | 46 | 100 |
| 9 | 62/35/3 | 411 | 49 | 288 |
| 10 | 62/35/3 | 360 | 50 | 152 |
| 11 | 62/35/3 | 574 | 47 | 50 |
| 12 | 62/35/3 | 122 | 49 | 53 |
| 13 | 62/35/3 | 428 | 51 | 55 |

Table 2

| | INK COMPOSITION No. | | | | | | | | | | | | | | | | | | | |
|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 |
| PIGMENT DISPERSION LIQUID | A | A | A | A | A | A | A | A | A | B | B | B | B | B | B | A | A | A | A | A |
| POLYMER PARTICLE No. | 1 | 2 | 3 | 4 | 5 | 6 | 7 | 8 | 9 | 2 | 6 | 7 | 8 | 10 | 9 | 11 | 12 | 13 | 14 | 15 |

Table 3

| EXPERIMENT No. | | INK COMPOSITION No. | PIGMENT PARTICLE DIAMETER (nm) | POLYMER PARTICLE DIAMETER (nm) | PARTICLE DIAMETER RATIO (LARGE/ SMALL) | logG'1 - logG'2 | logG'2 | Tc (°C) | IMAGE DEFORMATION | FIXING PROPERTIES |
|---|---|---|---|---|---|---|---|---|---|---|
| 1 | COMPARATIVE EXAMPLE1 | 1 | 77 | 31 | 2.5 | 2.4 | 4.4 | 39 | D | A |
| 2 | PRACTICAL EXAMPLE1 | 2 | 77 | 30 | 2.6 | 2.2 | 4.8 | 46 | B | A |
| 3 | PRACTICAL EXAMPLE2 | 3 | 77 | 30 | 2.6 | 2.8 | 4.9 | 89 | A | A |
| 4 | PRACTICAL EXAMPLE3 | 4 | 77 | 30 | 2.6 | 2.3 | 4.8 | 112 | A | B |
| 5 | COMPARATIVE EXAMPLE2 | 5 | 77 | 36 | 2.1 | 2.2 | 5.2 | 123 | A | C |
| 6 | PRACTICAL EXAMPLE4 | 6 | 77 | 50 | 1.5 | 2.2 | 4.8 | 46 | B | B |
| 7 | COMPARATIVE EXAMPLE3 | 7 | 77 | 73 | 1.1 | 2.3 | 5 | 47 | C | C |
| 8 | PRACTICAL EXAMPLE5 | 8 | 77 | 100 | 1.3 | 2.1 | 4.6 | 46 | B | B |
| 9 | PRACTICAL EXAMPLE6 | 9 | 77 | 288 | 3.7 | 2.2 | 4.9 | 49 | A | A |
| 10 | PRACTICAL EXAMPLE7 | 10 | 103 | 30 | 3.4 | 2.2 | 4.8 | 45 | A | A |
| 11 | PRACTICAL EXAMPLE8 | 11 | 103 | 50 | 2.1 | 2.2 | 4.8 | 46 | A | A |
| 12 | PRACTICAL EXAMPLE9 | 12 | 103 | 73 | 1.4 | 2.3 | 5 | 47 | B | B |
| 13 | COMPARATIVE EXAMPLE4 | 13 | 103 | 100 | 1.0 | 2.1 | 4.6 | 46 | C | C |

(continued)

| EXPERIMENT No. | | INK COMPOSITION No. | PIGMENT PARTICLE DIAMETER (nm) | POLYMER PARTICLE DIAMETER (nm) | PARTICLE DIAMETER RATIO (LARGE/ SMALL) | logG'1 - logG'2 | logG'2 | Tc (°C) | IMAGE DEFORMATION | FIXING PROPERTIES |
|---|---|---|---|---|---|---|---|---|---|---|
| 14 | PRACTICAL EXAMPLE10 | 14 | 103 | 152 | 1.5 | 2.2 | 4.8 | 50 | B | B |
| 15 | PRACTICAL EXAMPLE11 | 15 | 103 | 288 | 2.8 | 2.2 | 4.9 | 49 | A | A |
| 16 | COMPARATIVE EXAMPLE5 | 16 | 77 | 50 | 1.5 | 1.9 | 4.9 | 47 | C | C |
| 6 | PRACTICAL EXAMPLE4 | 6 | 77 | 50 | 1.5 | 2.2 | 4.8 | 46 | B | B |
| 17 | PRACTICAL EXAMPLE12 | 17 | 77 | 53 | 1.5 | 3.1 | 4.2 | 49 | A | A |
| 18 | COMPARATIVE EXAMPLE6 | 18 | 77 | 55 | 1.4 | 2.3 | 5.3 | 51 | C | C |

Table 4

| EXPERIMENT No. | | INK COMPOSITION No. | PIGMENT PARTICLE DIAMETER (nm) | POLYMER PARTICLE DIAMETER (nm) | PARTICLE DIAMETER RATIO (LARGE/ SMALL) | PIGMENT PARTICLE DIAMETER DISTRIBUTION (Mv/Mn) | POLYMER PARTICLE DIAMETER DISTRIBUTION (Mv/Mn) | IMAGE DEFORMATION | Fixing properties |
|---|---|---|---|---|---|---|---|---|---|
| 19 | PRACTICAL EXAMPLE 13 | 19 | 77 | 46 | 1.7 | 1.4 | 1.2 | A | B |
| 6 | PRACTICAL EXAMPLE4 | 6 | 77 | 50 | 1.5 | 1.4 | 1.6 | B | |
| 8 | PRACTICAL EXAMPLE5 | 8 | 77 | 100 | 1.3 | 1.4 | 1.6 | B | B |
| 20 | PRACTICAL EXAMPLE14 | 20 | 77 | 103 | 1.4 | 1.4 | 1.3 | A | B |

Table 5

| EXPERIMENT No. | | INK COMPOSITION No. | TREATMENT LIQUID | DIRECT / TRANSFER | IMAGE DEFORMATION | FIXING PROPERTIES |
|---|---|---|---|---|---|---|
| 21 | PRACTICAL EXAMPLE15 | 11 | NOT DEPOSITED | DIRECT | B | B |
| 22 | PRACTICAL EXAMPLE16 | 11 | DEPOSITED | DIRECT | A | B |
| 11 | PRACTICAL EXAMPLE4 | 11 | DEPOSITED | TRANSFER | A | A |

## Claims

**1.** An inkjet recording method comprising the steps of:

depositing droplets of an ink composition which contains at least water, organic solvent, coloring material particles and polymer micro-particles, one of the coloring material particles and the polymer micro-particles having a volume-average diameter that is 1.3 or more times larger than that of the other of the coloring material particles and the polymer-micro particles, the polymer micro-particles having a softening point (Tc) of 45°C through 120°C, removing a solvent component in the deposited droplets of the ink composition so that an ink image derived from the deposited droplets of the ink composition is left; and
heating the ink image at a temperature not lower than the softening point (Tc) of the polymer micro-particles,

**characterized in that** the polymer micro-particles have a viscoelastic character that satisfies conditions of:

$$\log G'1 - \log G'2 \geq 2;$$

and

$$\log G'2 \leq 5,$$

where G'1 is a storage elastic modulus of the polymer micro-particles at a temperature of T1 (°C) that is lower than the softening point of the polymer micro-particles by 20°C, and G'2 is a storage elastic modulus of the polymer micro-particles at a temperature of T2 (°C) that is higher than the softening point of the polymer micro-particles by 20°C.

**2.** The inkjet recording method as defined in claim 1, wherein the one of the coloring material particles and the polymer micro-particles has a particle diameter distribution broader than that of the other of the coloring material particles and the polymer micro-particles.

**3.** The inkjet recording method as defined in claim 1 or 2, further comprising the step of applying a treatment liquid after or before the step of depositing the droplets of the ink composition, the treatment liquid aggregating the coloring material particles and the polymer micro-particles to form the ink image.

**4.** The inkjet recording method as defined in claim 3, wherein:

the ink image is formed on an intermediate transfer body (12); and
the inkjet recording method further comprises the step of transferring the ink image from the intermediate transfer body (12) to a recording medium (34).

## Patentansprüche

**1.** Tintenstrahl-Aufzeichnungsverfahren, umfassend die Schritte:

Aufbringen von Tröpfchen einer Tintenzusammensetzung, die mindestens Wasser, ein organisches Lösungsmittel, Färbematerialpartikel und Polymer-Mikropartikel umfasst, wobei einer von den Färbematerialpartikeln und den Polymer-Mikropartikeln einen volumengemittelten Durchmesser aufweist, der um den Faktor 1,3 oder mehr größer ist als der von dem anderen von den Färbematerialpartikeln und den Polymer-Mikropartikeln, wobei die Polymer-Mikropartikel eine Erweichungstemperatur (Tc) von 45°C bis 120°C aufweisen, Entfernen einer Lösungsmittelkomponente in den aufgebrachten Tröpfchen der Tintenzusammensetzung, so dass ein Tintenbild, das aus den aufgebrachten Tröpfchen der Tintenzusammensetzung erhalten wird, verbleibt; und
Erwärmen des Tintenbildes bei einer Temperatur von nicht niedriger als die Erweichungstemperatur (Tc) der Polymer-Mikropartikel,

**dadurch gekennzeichnet, dass** die Polymer-Mikropartikel einen viskoelastischen Charakter aufweisen, der die Bedingungen:

$$\log G'1 - \log G'2 \geq 2;$$

und

$$\log G'2 \leq 5,$$

erfüllt,
worin G'1 das elastische Speichermodul der Polymer-Mikropartikel bei einer Temperatur T1 (°C) ist, die um 20°C niedriger ist als die Erweichungstemperatur der Polymer-Mikropartikel, und G'2 das elastische Speichermodul der Polymer-Mikropartikel bei einer Temperatur T2 (°C) ist, die um 20°C höher ist als die Erweichungstemperatur der Polymer-Mikropartikel.

**2.** Tintenstrahl-Aufzeichnungsverfahren gemäß Anspruch 1, worin einer von den Färbematerialpartikeln und den Polymer-Mikropartikeln eine Partikeldurchmesserverteilung aufweist, die breiter ist als die von dem anderen von den Färbematerialpartikeln und den Polymer-Mikropartikeln.

**3.** Tintenstrahl-Aufzeichnungsverfahren gemäß Anspruch 1 oder 2, ferner umfassend einen Schritt zum Auftragen einer Behandlungsflüssigkeit vor oder nach dem Schritt zum Aufbringen der Tröpfchen der Tintenzusammensetzung, wobei die Behandlungsflüssigkeit die Färbematerialpartikel und die Polymer-Mikropartikel aggregiert, um ein Tintenbild zu bilden.

**4.** Tintenstrahl-Aufzeichnungsverfahren gemäß Anspruch 3, worin:

das Tintenbild auf einem Zwischentransferkörper (12) gebildet wird; und
das Tintenstrahl-Aufzeichnungsverfahren ferner einen Schritt zum Transferieren des Tintenbildes von dem Zwischentransferkörper (12) auf ein Aufzeichnungsmedium (34) umfasst.

## Revendications

**1.** Procédé d'enregistrement par jet d'encre comprenant les étapes de :

dépôt de gouttelettes d'une composition d'encre qui contient au moins de l'eau, un solvant organique, des particules de matière colorante et des microparticules de polymère, l'une des particules de matière colorante et des microparticules de polymère ayant un diamètre moyen en volume qui est supérieur de 1,3 fois ou plus à celui de l'autre des particules de matière colorante et des microparticules de polymère, les microparticules de polymère ayant un point de ramollissement (Tc) de 45°C à 120°C,
retrait d'un composant solvant dans les gouttelettes de la composition d'encre déposées de sorte qu'une image d'encre dérivée des gouttelettes de la composition d'encre déposées demeure ; et
chauffage de l'image d'encre à une température non inférieure au point de ramollissement (Tc) des microparticules de polymère,

**caractérisé en ce que** les microparticules de polymère ont un caractère viscoélastique qui satisfait les conditions de :

$$\log G'1 - \log G'2 \geq 2 ;$$

et

$$\log G'2 \leq 5,$$

où G'1 est un module élastique de conservation des microparticules de polymère à une température de T1 (°C) qui est inférieure de 20°C au point de ramollissement des microparticules de polymère, et G'2 est un module élastique de conservation des microparticules de polymère à une température de T2 (°C) qui est supérieure de 20°C au point de ramollissement des microparticules de polymère.

**2.** Procédé d'enregistrement par jet d'encre selon la revendication 1 où l'une des particules de matière colorante et des microparticules de polymère a une distribution de diamètre de particules plus large que celle de l'autre des particules de matière colorante et des microparticules de polymère.

**3.** Procédé d'enregistrement par jet d'encre selon la revendication 1 ou 2 comprenant en outre l'étape d'application d'un liquide de traitement après ou avant l'étape de dépôt des gouttelettes de la composition d'encre, le liquide de traitement entraînant l'agrégation des particules de matière colorante et des microparticules de polymère pour former l'image d'encre.

**4.** Procédé d'enregistrement par jet d'encre selon la revendication 3 où :

l'image d'encre est formée sur un corps de transfert intermédiaire (12) ; et
le procédé d'enregistrement par jet d'encre comprend en outre l'étape de transfert de l'image d'encre du corps de transfert intermédiaire (12) à un support d'enregistrement (34).

FIG.1

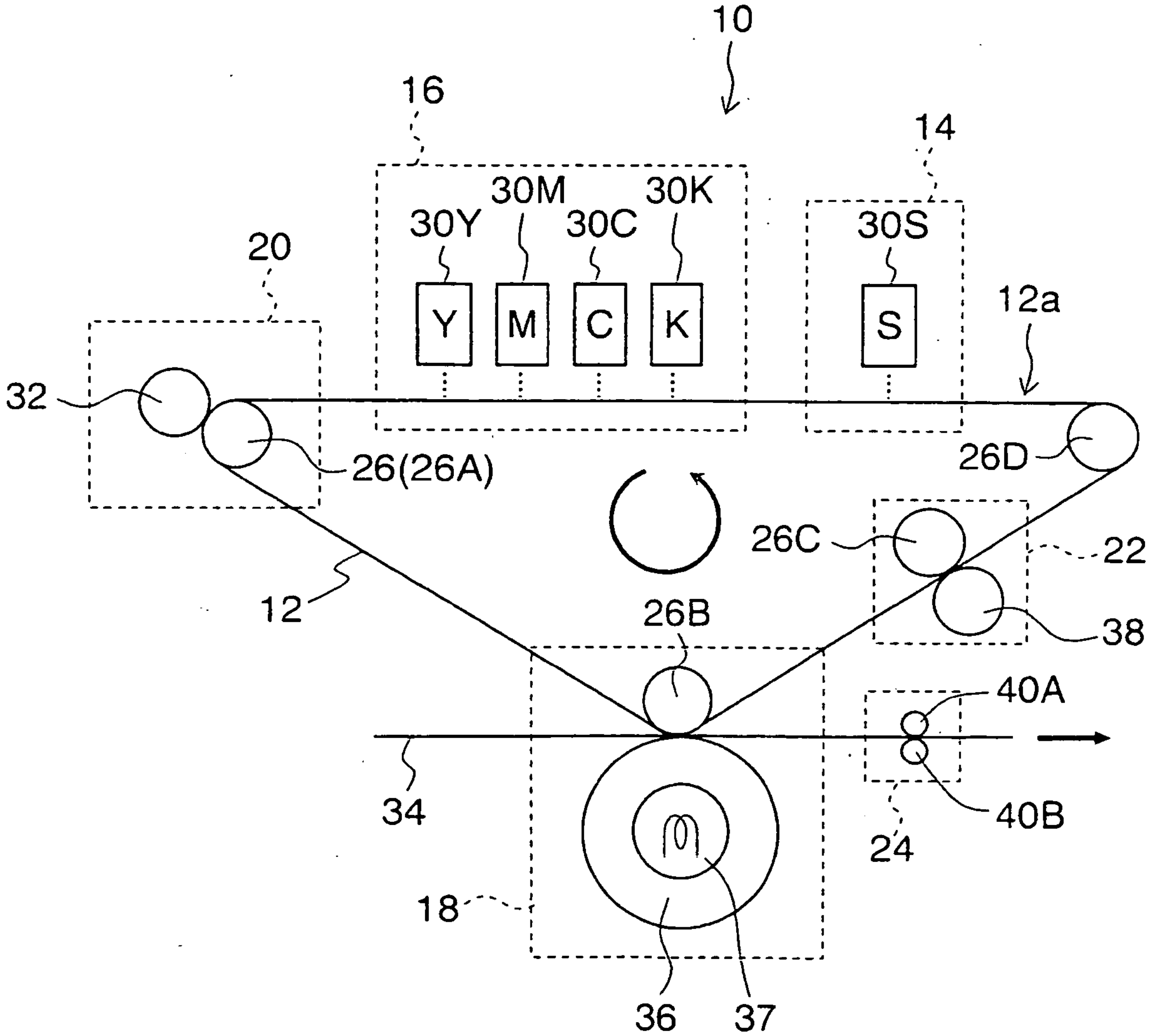
10
16
14
20
30Y
30M
30C
30K
30S
Y
M
C
K
S
12a
32
26(26A)
26D
26C
22
12
26B
38
40A
34
40B
24
18
36
37

FIG.2

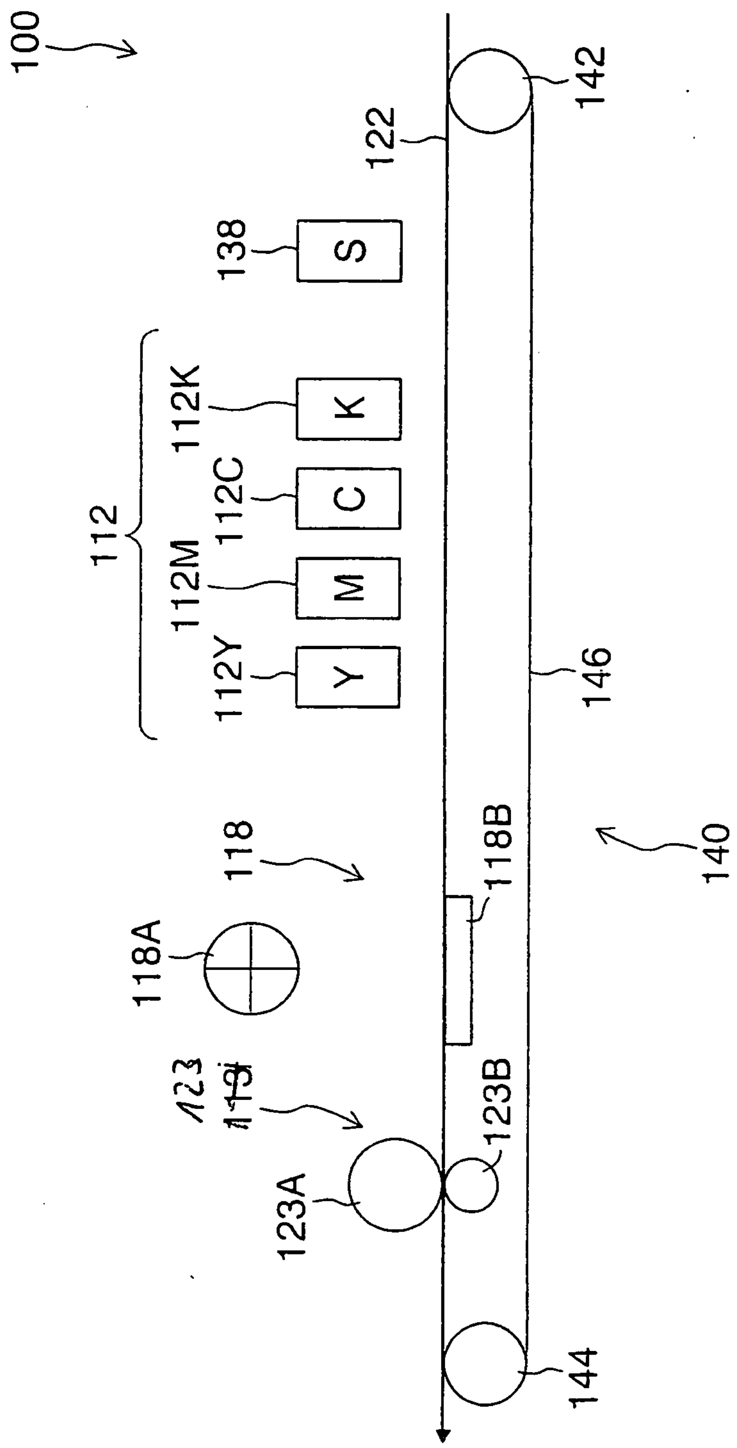
100
142
122
138
S
112
112K
K
112C
C
112M
M
112Y
Y
146
118
118B
140
118A
123
119
123B
123A
144

FIG. 3A

CRITERION: A

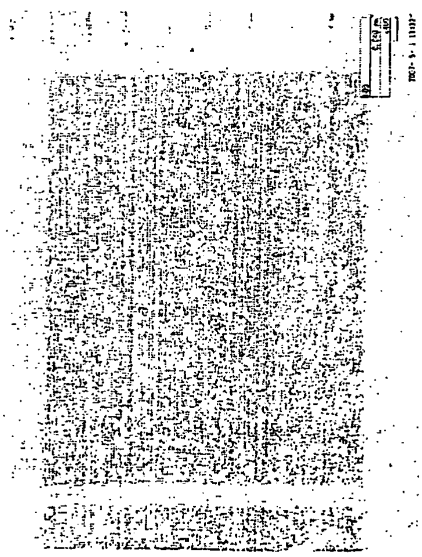

FIG. 3B

CRITERION: B

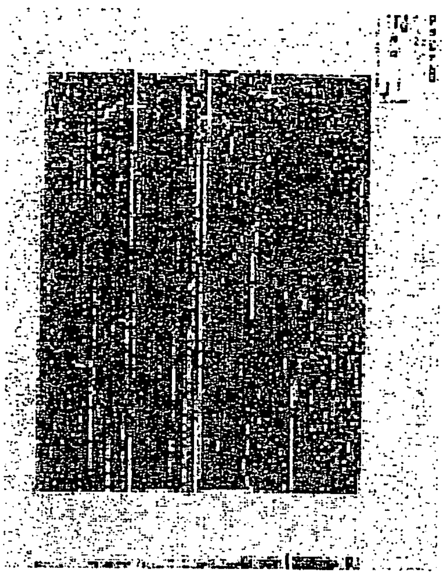

FIG. 3C

CRITERION: C

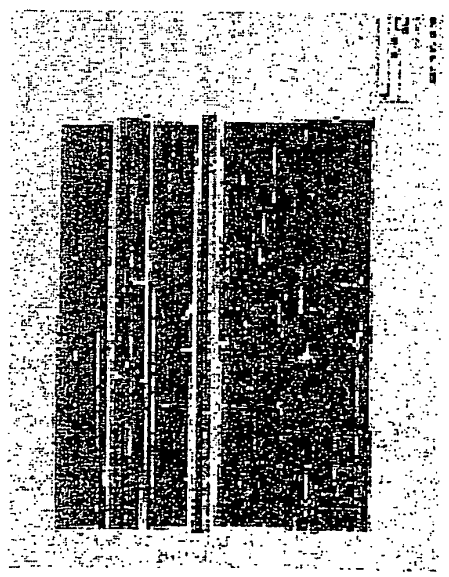

FIG. 3D

CRITERION: D

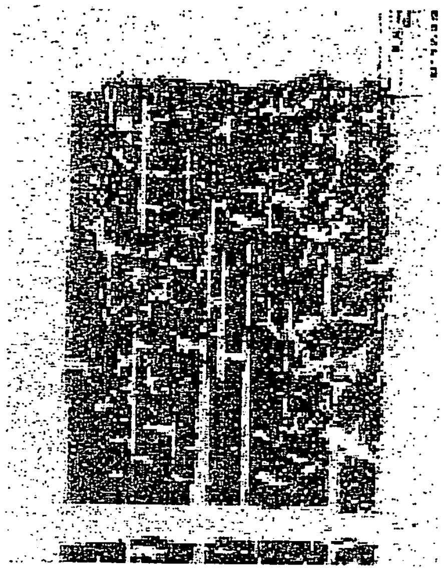

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005105161 A
- JP 2004352768 A
- JP 2004124013 A
- EP 0606490 A1